# EUROPÄISCHE PATENTSCHRIFT

(11) **EP 2 951 458 B1**
(45) Veröffentlichungstag und Bekanntmachung des Hinweises auf die Patenterteilung: **11.01.2017**
(21) Anmeldenummer: 14717657.2
(22) Anmeldetag: 30.01.2014
(51) Int. Cl.: F16F 9/34

(54) **ZYLINDER-KOLBEN-EINHEIT MIT KOLBENDROSSEL**
CYLINDER-PISTON UNIT WITH PISTON THROTTLE
UNITÉ CYLINDRE-PISTON COMPRENANT UN ÉTRANGLEMENT DE PISTON

(30) Priorität: 31.01.2013 DE 102013001650
(43) Veröffentlichungstag der Anmeldung: 09.12.2015
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2014/000029
(87) Internationale Veröffentlichungsnummer: WO 2014/117765

(56) Entgegenhaltungen:
- EP-B1- 2 006 480

## Beschreibung

Die Erfindung betrifft eine Zylinder-Kolben-Einheit, die einen Zylinder und einen in diesem mittels einer Kolbenstange geführten, gegen die Zylinderinnenwandung abgedichteten, einen Verdrängungsraum gegen einen Ausgleichsraum abgrenzenden Kolben mit mindestens einem Längsdurchbruch umfasst, wobei im Ausgleichsraum oder im Verdrängunsgraum ein mittels einer Druckfeder abgestützter, zumindest gegen die Zylinderinnenwandung abgedichteter Ausgleichskolben angeordnet ist und wobei eine Ventilscheibe zusammen mit der verdrängungsraumseitigen Kolbenfläche einen Durchtrittsweg begrenzt.

Aus der EP 2 006 480 B1 ist eine derartige Zylinder-Kolben-Einheit bekannt. Beim Einfahren der Kolbenstange hat diese Einheit eine begrenzte Dämpfungsleistung.

Der vorliegenden Erfindung liegt daher die Aufgabe zugrunde, eine Zylinder-Kolben-Einheit mit hoher Dämpfungs- und Bremsleistung zu entwickeln.

Diese Problemstellung wird mit den Merkmalen des Hauptanspruches gelöst. Dazu ist die Querschnittsfläche des Durchtrittswegs, multipliziert mit dem Kehrwert der Länge des Durchtrittswegs und dem Kehrwert des Mittenrauwerts Rₐ seiner Begrenzungflächen kleiner als 50.

Weitere Einzelheiten der Erfindung ergeben sich aus den Unteransprüchen und der nachfolgenden Beschreibung schematisch dargestellter Ausführungsformen.
- Figur 1:: Längsschnitt einer Zylinder-Kolben-Einheit;
- Figur 2:: Detail einer Zylinder-Kolben-Einheit nach Figur 1;
- Figur 3:: Seitenansicht des Kolbens mit anliegender Ventilscheibe;
- Figur 4:: Seitenansicht des Kolbens mit angehobener Ventilscheibe;
- Figur 5:: Kolbenstange und Kolben mit nutförmigem Kanal;
- Figur 6:: Schnitt einer Kolbenstange und eines Kolbens mit schneckenförmiger Kolbenfläche;
- Figur 7:: Detail eines Kolbens nach Figur 6 mit einer Ventilscheibe;
- Figur 8:: Kolbenstange und Kolben mit spiralförmigem Kanal;
- Figur 9:: Schnitt eines Kolben mit stirnseitigen Noppen;
- Figur 10:: Kolbenstange und Kolben mit rauem Kolbenstirnflächenabschnitt.

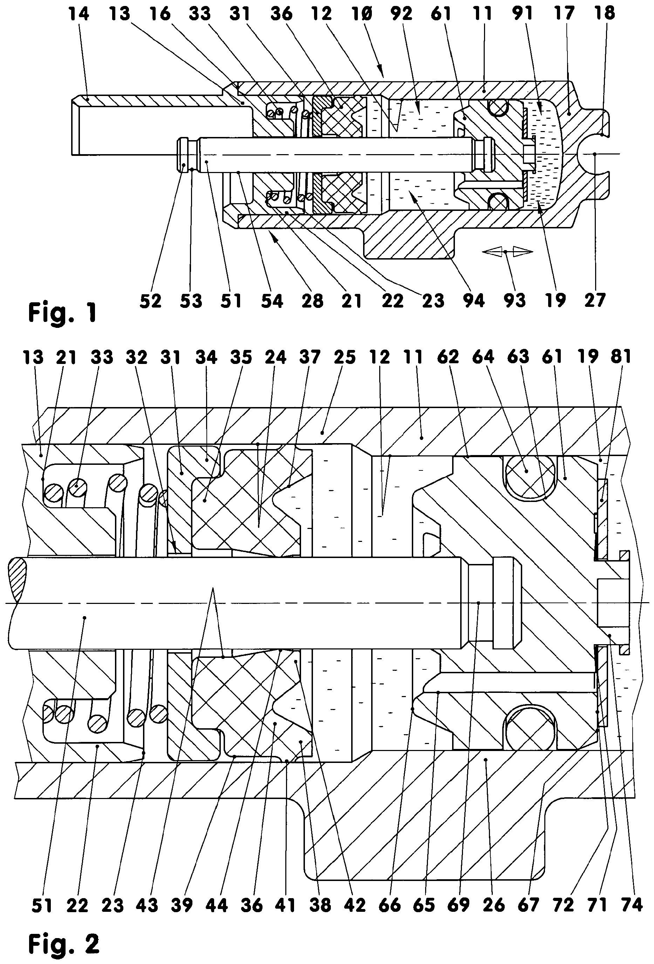

Die Figur 1 zeigt eine Zylinder-Kolben-Einheit (10), die beispielsweise als hydraulischer Dämpfer zum Verzögern linear bewegter Massen eingesetzt wird. In der Figur 2 ist ein Detail einer derartigen Zylinder-Kolben-Einheit (10) dargestellt. Die Zylinder-Kolben-Einheit (10) umfasst einen Zylinder (11), in dem ein mittels einer Kolbenstange (51) geführter Kolben (61) verfahrbar ist. Der scheibenförmige Kolben (61) hat an seiner Umfangsfläche (62) eine Ringnut (63), in der ein Dichtelement (64), z.B. ein O-Ring (64) sitzt. Der O-Ring (64) liegt an der nutfreien Zylinderinnenwandung (12) an und dichtet den Kolben (61) gegen diese ab. Die Kolbenstange (51) ragt mit radialem Spiel durch einen Zylinderkopfdeckel (13) hindurch aus dem Zylinder (11) heraus. Der Kolbenstangenkopf (52) hat im Ausführungsbeispiel eine umlaufende Ringnut (53). Im Zylinder (11) ist der Zylinderkopfdeckel (13) z.B. mittels Rastnasen befestigbar. Ein ringförmiger Einschubanschlag (16) sichert die Lage des Zylinderkopfdeckels (13) in axialer Richtung. Der Zylinderkopfdeckel (13) umfasst im Ausführungsbeispiel eine außenliegende Schale (14), z.B. eine Schutzschale. Am konkav ausgebildeten Zylinderboden (17) ist eine elastisch verformbare Aufnahmeklammer (18) angeordnet.

Im Zylinderinnenraum (19) grenzt der Kolben (61) einen Verdrängungsraum (91) von einem Ausgleichsraum (92) ab. Im Ausführungsbeispiel ist der Verdrängungsraum (91) auf der der Kolbenstange (51) abgewandten Seite des Kolbens (61) angeordnet, während der Ausgleichsraum (92) kolbenstangenseitig liegt. Es ist aber auch denkbar, den Verdrängungsraum (91) kolbenstangenseitig und den Ausgleichsraum (92) auf der der Kolbenstange (51) abgewandten Seite anzuordnen. Die Kolbenstange (51) kann aus einem thermoplastischen oder duroplastischen Kunstoff, aus einem metallischen Werkstoff, etc. ausgebildet sein. Im Ausführungsbeispiel beträgt der Durchmesser der Kolbenstange zwischen 30 % und 35 % des Durchmessers des Kolbens (61).

Im Ausgleichsraum (92) des Zylinders (11) ist ein verschiebbarer Ausgleichskolben (31) angeordnet. In der Darstellung der Figuren 1 und 2 sitzt der Ausgleichskolben (31) mit Spiel (32) auf der Kolbenstange (51). Zwischen dem Ausgleichkolben (31) und dem Zylinderkopfdeckel (13) ist ein elastisch verformbares Element (33), z.B. eine Druckfeder (33) angeordnet. Die Druckfeder (33) umgreift die Kolbenstange (51) und stützt sich am Ausgleichskolben (31) und in einer Ringnut (21) des Zylinderkopfdeckels (13) ab. Der Außendurchmesser der Druckfeder (33) steigt von beiden Federenden zur Federmitte hin an. Die äußere Federführung (22) bildet eine Hubbegrenzung (23) für den Ausgleichskolben (31). Die Druckfeder (33) kann als Schraubenfeder, Tellerfeder, Elastomerkörper, etc. ausgebildet sein.

Der Ausgleichskolben (31) hat auf seiner dem Kolben (61) zugewandten Seite einen Führungsring (34). Dieser umgreift einen Aufnahmezapfen (35) eines Dichtelements (36). Das hülsenförmige Dichtelement (36) hat eine zumindest annähernd quaderförmige Querschnittsfläche mit einer in Richtung des Kolbens (61) zeigenden Ringnut (37). Ein äußerer Dichtelementabschnitt (38) trägt eine an der ansonsten zylindrischen Umfangsfläche (39) angeordnete umlaufende äußere Dichtnase (41). Diese Dichtnase (41) ist in der Darstellung der Figuren 1 und 2 an die Innenwandung (24) eines aufgeweiteten Abschnitts (25) des Zylinders (11) angepresst. Die Aufweitung des Zylinders (11) beträgt beispielsweise 8 % gegenüber dem Zylinderinnendurchmesser im Bereich (26) des Kolbens (61).

Der innere Dichtelementabschnitt (42) hat eine zylindrische Innenwandung (43) mit einer nach innen zeigenden, umlaufenden Dichtnase (44). Die Stirnseite des unteren Dichtelementabschnitts (42) ist gegenüber der kolbenseitigen Stirnseite des Dichtelements (36) um 10 % der Länge des Dichtelements (36) in Richtung des Ausgleichskolbens (31) versetzt. Im eingebauten Zustand ist die innere Dichtnase (44) an die Umfangsfläche (54) der Kolbenstange (51) angepresst. Die beiden Dichtnasen (41, 44) sind in der Längsrichtung (93) versetzt zueinander angeordnet.

Der Kolben (61) ist an der Kolbenstange (51) befestigt. Beispielsweise ist er mit dieser formschlüssig verrastet, verklebt, etc. Die beiden Teile können jedoch auch kraftschlüssig, stoffschlüssig, etc. miteinander verbunden sein. Der Kolben (61) kann auch an die Kolbenstange (51) angeformt sein. Die Umfangsfläche (64) des Kolbens (61) ist - zu beiden Seiten der Ringnut (63) - zylindrisch ausgebildet. Der Durchmesser des Kolbens (61) beträgt im Ausführungsbeispiel 7,35 Millimeter.

Im Kolben (61) sind beispielsweise drei in Längsrichtung (93) orientierte Durchbrüche (65) angeordnet, vgl. die Figuren 2, 5 und 6. Diese verbinden die der Kolbenstange (51) zugewandte Kolbenstangenanschlussseite (66) mit der Kolbenstirnfläche (67). Die Längsdurchbrüche (65) haben im Ausführungsbeispiel jeweils eine nierenförmige Querschnittsfläche und liegen auf demselben Teilkreis. An der Kolbenstirnfläche (67) enden die Längsdurchbrüche (65) in einem Ringkanal (68), der koaxial zur Kolbenmittellinie (69) ist. Die Summe der Querschnittsflächen der Längsdurchbrüche (65) in einer Normalenebene zur Längsrichtung (93) der Zylinder-Kolben-Einheit (10) beträgt im Ausführungsbeispiel 9,5 % der Querschnittsfläche des Kolbens (61) in derselben Ebene. Die Summe der Querschnittsflächen kann zwischen 3 % und 15 % der Querschnittsfläche des Kolbens (61) liegen.

Die Kolbenstirnfläche (67) umfasst eine innerhalb des Ringkanals (68) angeordnete innere Fläche (71) und eine äußere Fläche (72), die außerhalb des Ringkanals (68) angeordnet ist. Im Ausführungsbeispiel der Figuren 1 - 5 liegen beide Flächen (71, 72) in derselben Ebene.

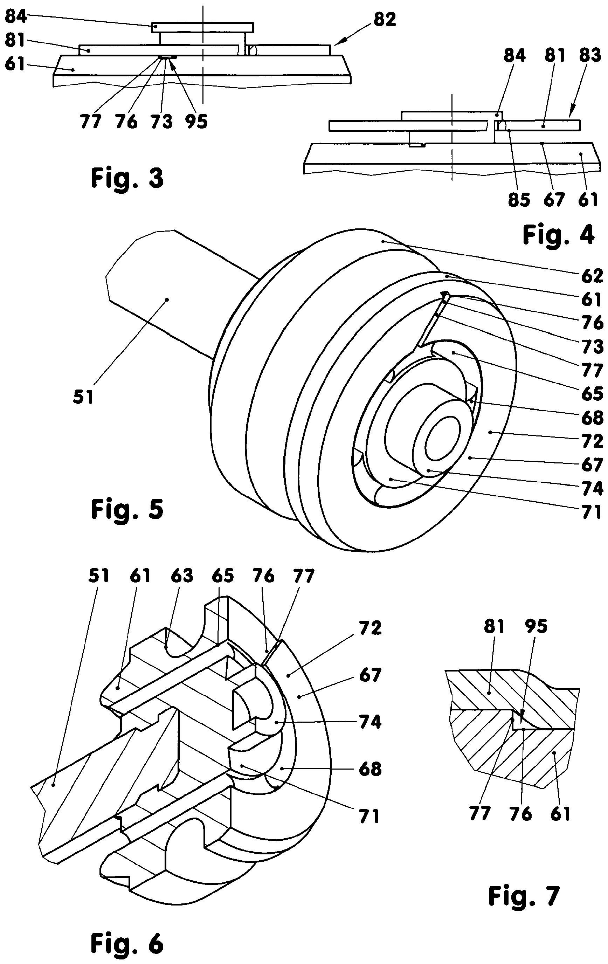

In den Darstellungen der Figuren 3 - 5 ist in der äußeren Fläche (72) der Kolbenstirnfläche (67) ein Kanal (73) eingeprägt. Dieser hat in diesem Ausführungsbeispiel eine Tiefe von 0,16 Millimetern und eine Breite von 0,2 Millimetern. Er verbindet den Ringkanal (68) mit der Umfangsfläche (62). Hierbei entspricht die Tiefe des Kanals (73) der Tiefe des Ringkanals (68). Mit einer gedachten Radialen zur Kolbenmittellinie (69) schließt der Kanal (73) einen Winkel von 45 Grad ein. In diesem Ausführungsbeispiel beträgt der Mittenrauwert Rₐ des Kanalgrunds (76) sowie der Mittenrauwert Rₐ der seitlich den Kanal (73) begrenzenden Flächen (77) 1,6 Mikrometer.

Mittig auf der Kolbenstirnfläche (67) ist ein aus dieser heraus ragender Gleitzapfen (74) angeformt. Der Gleitzapfen (74) trägt eine Ventilscheibe (81), die zwischen zwei Endlagen (82, 83) in Längsrichtung (93) des Kolbens (61) relativ zu diesem verschiebbar ist. In der einen Endlage (82), vgl. Figur 3, liegt die Ventilscheibe (81) an der Kolbenstirnfläche (67) an. In der zweiten Endlage (83), vgl. Figur 4, in der die Ventilscheibe (81) beabstandet zur Kolbenstirnfläche (67) ist, verhindert eine Abhebesicherung (84) den Verlust der Ventilscheibe (81).

Im Ausführungsbeispiel hat die Ventilscheibe (81) eine konstante Dicke von z.B. 0,2 Millimetern und in einer Ebene normal zur Längsrichtung (93) einen ringförmigen Querschnitt. Die Ventilscheibe (81) ist beispielsweise aus einem elastisch biegbaren Werkstoff hergestellt. Die dem Kolben (61) zugewandte kolbenseitige Oberfläche (85) hat beispielsweise den gleichen Mittenrauwert Rₐ wie die Grundfläche (76) des Kanals (73). Sie kann aber auch zumindest bereichsweise einen höheren oder niedrigeren Mittenrauwert Rₐ aufweisen. Die Ventilscheibe (81) kann in der genannten Ebene auch einen dreieckigen, polygonförmigen, rechteckigen, etc. Querschnitt aufweisen. Im dargestellten Ausführungsbeispiel ist die Ventilscheibe (81) kleiner als die Fläche der Kolbenstirnfläche (67). In der Darstellung der Figuren 1 - 4 beträgt der Durchmesser der Ventilscheibe (81) 86 % des Durchmessers des Kolbens (61). Die von der Ventilscheibe (81) abgedeckte Länge des Kanals (73) beträgt damit 1,14 Millimeter. Der vom Kanal (73) und von der Ventlischeibe (81) begrenzte Raum wird im Folgenden Durchtrittsweg (95) genannt.

Aus der Querschnittsfläche des Durchtrittswegs (95), multipliziert mit dem Kehrwert der Länge des Durchtrittswegs (95) und dem Mittenrauwert Rₐ der den Durchtrittsweg (95) begrenzenden Oberflächen ergibt sich ein dimensionsloser Kennwert. Im Ausführungsbeispiel beträgt dieser 17,5. Dieser Wert kann in einem Intervall zwischen 0 und 50 liegen. In den hier beschriebenen Ausführungsbeispielen liegt er zwischen 1 und 40. Um den Kennwert zu ermitteln, werden die Einzelwerte aller Durchtrittswege (95) addiert, die von der Kolbenstirnfläche (67) und der Ventilscheibe (81) begrenzt werden. Als Mittenrauwert Rₐ wird der nach Flächenanteilen gewichtete Mittenrauwert der Einzel-Mittenrauwerte Rₐ, _{E} der Begrenzungsflächen des Durchtrittswegs (95) eingesetzt.

Der Kanal (73) kann auch an der Ventilscheibe (81) angeordnet sein. Auch ist es denkbar, beispielsweise einen Kanal (73) kolbenseitig und z.B. versetzt hierzu einen Kanal (73) in der Ventilscheibe (81) einzuprägen. Auch weitere Kanaäle sind denkbar. Der Versatz der Kanäle (73) ist hierbei so gewählt, dass ihre Projektionen in einer Draufsicht auf die Kolbenstirnfläche (67) sich nicht überlappen. Zur Sicherung der Winkellage um die Zylinderlängsachse (27) können der Befestigungszapfen (74) und/oder die Ventilscheibe (81) eine Verdrehsicherung aufweisen.

Zum Zusammenbau der Zylinder-Kolben-Einheit (10) wird der Kolben (61) beispielsweise mit der Kolbenstange (51) beispielsweise formschlüssig verrastet und ggf. verklebt und das Kolbendichtelement (64) auf den Kolben (61) montiert. Außerdem wird die Ventilscheibe (81) auf den Kolben (61) aufgesetzt und mittels der Abhebesicherung (84) gesichert. Der Zylinder (11), dessen offener Zylinderkopf (28) bei der Montage z.B. nach oben zeigt, wird mit hydraulischem Fluid (94) bespielsweise bis zu 30 % seines Innenraums (19) befüllt. Die Montageeinheit mit dem Kolben (61) und der Kolbenstange (51) wird nun mit dem Kolben (61) voraus in den Zylinder (11) eingesteckt. Anschließend werden das Ausgleichskolben-Dichtelement (36) und der Ausgleichskolben (31) auf die Kolbenstange (51) aufgeschoben. Nach dem Aufschieben der Feder (33) auf die Kolbenstange (51) wird der Zylinderkopfdeckel (13) auf die Kolbenstange (51) aufgeschoben und im Zylinder (11) befestigt.

Bei der Montage der Zylinder-Kolben-Einheit (10) wird der Zylinder (11) mittels der Aufnahmeklammer (18) an einem von zwei relativ zueinander bewegbaren Bauteilen befestigt. Die Kolbenstange (51) greift mit ihrer Ringnut (53) in das zweite der beiden Bauteile ein oder schlägt - bei einer Ausführung als Anschlagdämpfer - an dieses an.

Werden die beiden relativ zueinander bewegbaren Bauteile aufeinander zu bewegt, wird die Kolbenstange (51) in Richtung des Zylinderbodens (17) belastet. Der Kolben (61) drückt gegen das Hydrauliköl (94), wobei die auf dem Gleitzapfen (74) linear verschiebbare Ventilscheibe (81) gegen die Kolbenstirnfläche (67) gedrückt wird. Die Verbindung des Ringkanals (68) zum Verdrängungsraum (91) wird hierbei auf den Durchtrittsweg (95) reduziert. Die große Länge - der in der Figur 5 dargestellte Durchtrittsweg (95) ist um 25 % länger als ein radial angeordneter Durchtrittsweg - und der geringe Querschnitt des Durchtrittswegs (95) bilden einen hohen Widerstand für das entlang des Durchtrittswegs (95) durchgepresste Öl. Die Strömungsgeschwindigkeit des Öls wird stark gedrosselt. Über den Ringkanal (68) gelangt das aus dem Verdrängungsraum (91) verdrängte Öl (94) in die Längskanäle (65) und wird durch diese hindurch in den Ausgleichsraum (92) gefördert.

Im Ausgleichsraum (92) verdrängt das Öl das Dichtelement (36) und den Ausgleichskolben (31) gegen die Feder (33). Der genutzte Innenraum (19) der Zylinder-Kolben-Einheit (10) vergrößert sich. Die Einfahrgeschwindigkeit der Kolbenstange (51) wird stark verzögert. Die Zylinder-Kolben-Einheit (10) erreicht eine hohe Dämpfungs- und Verzögerungsleistung. Die Endlage der Kolbenstange (51) beim Einfahren ist erreicht, wenn entweder der Kolben (61) am Zylinderboden (17) anstößt oder wenn der Ausgleichsraum (92) sein maximales Volumen erreicht hat. Besipielsweise liegt dann der Ausgleichskolben (31) am Zylinderkopfdeckel (13) an.

Werden die beiden Bauteile wieder auseinander gefahren, wird die Kolbenstange (51) in Richtung des Zylinderkopfdeckels (13) gezogen. Das Öl strömt durch die Längskanäle (65) hindurch. Hierbei wird die Ventilscheibe (81) in der Längsrichtung (93) zur Abhebesicherung (84) hin verschoben. Der Abstand der Ventilscheibe (81) zur Kolbenstirnfläche (67) wird vergrößert. Das Öl strömt nun fast widerstandsfrei aus dem Ausgleichsraum (92) in den Verdrängungsraum (91). Der Hub der Kolbenstange (51) ist beendet, wenn der Kolben (61) am Dichtungselement (36) anliegt und der Ausgleichskolben (31) die Feder (33) komprimiert hat.

Zum Ausfahren der Kolbenstange (51) kann die Zylinder-Kolben-Einheit (10) auch eine Ausfahrfeder umfassen. Diese kann in der Bauform einer Druckfeder im Verdrängungsraum angeordnet sein oder bei einer Ausführung als Zugfeder im Ausgleichsraum sitzen. Auch ist es denkbar, eine auf die Kolbenstange (51) wirkende Ausfahrfeder außerhalb des Zylinders (11) der Zylinder-Kolben-Einheit (10) anzuordnen. Eine derartige Zylinder-Kolben-Einheit kann als Anschlagdämpfer eingesetzt werden.

Es ist auch denkbar, den Ausgleichskolben (31) im Verdrängungsraum (91) anzuordnen. Beim Verzögern wird dann sowohl der Kolben (61) als auch der Ausgleichskolben (31) verschoben. Je nach Auslegung der Ausgleichskolbenfeder (33) spricht zunächst der Ausgleichskolben (31) und dann die Kolbendrossel (65, 73) oder erst die Kolbendrossel (65, 73) und dann der Ausgleichskolben (31) an. Auch ein gleichzeitiges Ansprechen ist denkbar. Mit einer derartigen Variante kann ein hub- und/oder geschwindigkeitsabhängiges Dämpfungsverhalten erreicht werden.

Der Verdrängungsraum (91) kann auch kolbenstangenseitig angeordnet sein. Beispielsweise sitzt dann auch die Ventilscheibe (81) kolbenstangenseitig auf dem Kolben (61). Beispielsweise ist dann in die dem Verdrängungsraum (91) zugewandte Kolbenstirnfläche (67) ein Kanal (73) eingeprägt. Der Ausgleichskolben (31) kann auch in diesem Ausführungsbeispiel im Ausgleichsraum (92) oder im Verdrängungsraum (91) angeordnet sein.

Die Figur 6 zeigt einen dimetrischen Längsschnitt einer Kolbenstange (51) mit einem Kolben (61), dessen Kolbenstirnfläche (67) schneckenförmig ausgebildet ist. Die Kolbenstirnfläche (67) hat in der inneren Fläche (71) und in der äußeren Fläche (72) eine in einer Radialenebene der Kolbenmittellinie (69) liegende Begrenzungsfläche (77), die eine Stufe überbrückt. Ihre Höhe beträgt im Ausführungsbeispiel 0,2 Millimeter. Von der Grundfläche (76) aus steigt die Kolbenstirnfläche (67) in der Darstellung der Figur 6 entgegen dem Uhrzeigersinn mit konstanter Steigung um den Gleitzapfen (74) herum bis zum oberen Ende der Stufe an.

In diesem Ausführungsbeispiel haben sowohl die Kolbenstirnfläche (67) als auch die der Kolbenstirnfläche (67) zugewandte Oberfläche (85) der Ventilscheibe (81) einen Mittenrauwert Rₐ von 1,6 Mikrometern.

Der übrige Aufbau der Zylinder-Kolben-Einheit (10) ist wie oben beschrieben. Auch die Montage erfolgt, wie im Zusammenhang mit dem obigen Ausführungsbeispiel beschrieben.

Beim Einfahren der Kolbenstange (51) wird die Ventilscheibe (81) an die Kolbenstirnfläche (67) angepresst. Dies ist in der Figur 7 dargestellt. Die Ventilscheibe (81) verformt sich, so dass der Durchtrittsweg (95) eine annähernd dreieckige Querschnittsfläche annimmt.

Der Kennwert des Durchtrittswegs (95), der nach der oben genannten Formel ermittelt wird, beträgt in diesem Ausführungsbeispiel 12,6.

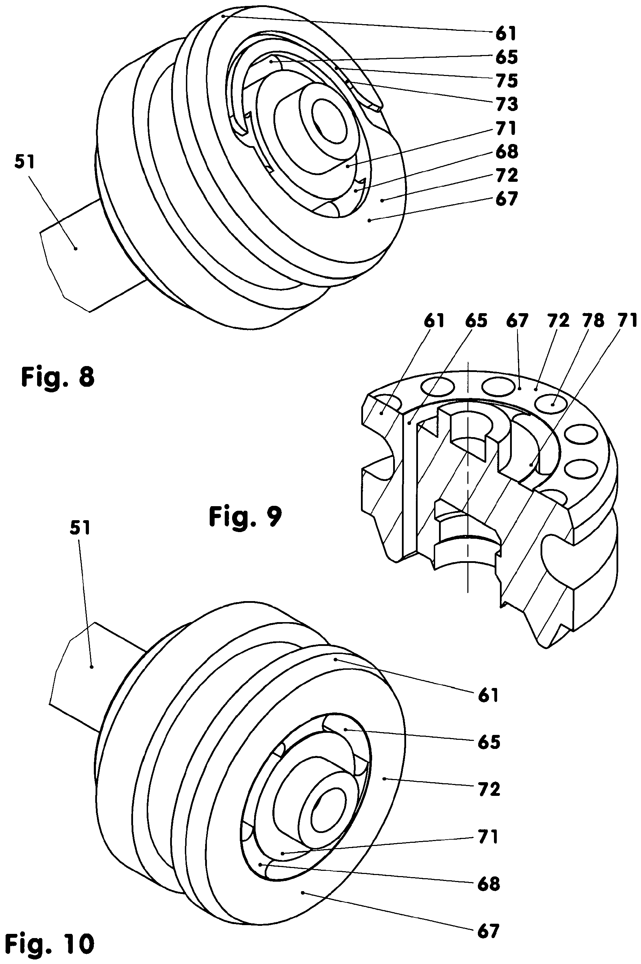

Die Figur 8 zeigt eine Einheit aus Kolben (61) und Kolbenstange (51), wobei in die Kolbenstirnfläche (67) eine spiralförmige Nut (73) eingeprägt ist. Dieser Kanal (73) verbindet den Ringkanal (68) mit der Umfangsfläche (62) des Kolbens. Er hat im Ausführungsbeispiel eine konstante Tiefe von 0,2 Millimetern. Diese Tiefe entspricht der Tiefe des Ringkanals (68). Der Kanal (73) überstreicht in der Darstellung der Figur 8 ein Segment von 180 Grad auf einem konstanten Radius um die Kolbenmittellinie (69). Er hat eine weitgehend konstante Breite von 0,2 Millimetern. Der Einlauf und der Auslauf haben z.B. die doppelte Breite. Der Kanalgrund (76) und die seitlichen Begrenzungen (77) des Kanals (73) haben in diesem Ausführungsbeispiel einen konstanten Mittenrauwert Rₐ von 1,6 Mikrometern.

Auch in diesem Ausführungsbeispiel begrenzt beim Einfahren des Kolbens (61) die Kolbenstirnfläche (67) zusammen mit der Ventilscheibe (81) einen Durchtrittsweg (95), der durch den Kanal (73) gebildet wird. Der für diese Ausführungsform ermittelte Kennwert des Durchtrittswegs (95) beträgt 2,8.

In der Figur 9 ist eine weitere Ausführungsform eines Kolbens (61) dargestellt. Die äußere Fläche (72) der Kolbenstirnfläche (67) weist in dieser Darstellung 12 Noppen (78) auf, die jeweils um ein Hunderstel Millimeter aus der äußeren Fläche (72) herausstehen. Der Durchmesser dieser Noppen beträgt hier 0,8 Millimeter. Sie sind alle auf demselben Teilkreis angeordnet, dessen Durchmesser beispielsweise 78 % des Kolbendurchmessers beträgt. Es ist auch denkbar, die Noppen (78) in der Draufsicht trapezförmig, dreieckig, elliptisch etc. auszubilden. Die innere Fläche (71) ist in diesem Ausführungsbeispiel um die Höhe der Noppen (78) gegenüber der äußeren Fläche (72) erhöht. Die äußere Fläche (72) und die der Kolbenstirnseite (67) zugewandte Oberfläche (85) der Ventilscheibe (81) haben einen Mittenrauwert Rₐ von 1,6 Mikrometern.

In diesem Ausführungsbeispiel ergibt sich der Kennwert des Durchtrittswegs (95), der wie oben beschrieben ermittelt wird, zu 28,1.

Die Figur 10 zeigt eine Einheit aus einem Kolben (61) und einer Kolbenstange (51), bei der die äußere Fläche (72) der Kolbenstirnfläche (67) eine erhöhte Rauigkeit aufweist. Beispielsweise beträgt der durch Erodieren erzeugte Mittenrauwert Rₐ der äußeren Fläche (72) 8,5 Mikrometer. Die der Kolbenstirnfläche (67) zugewandte Oberfläche (85) der Ventilscheibe (81) hat einen Mittenrauwert Rₐ von 1,6 Mikrometern. Gegebenenfalls kann diese Oberfläche (85) auch einen höheren Mittenrauwert Rₐ aufweisen. Für das beschriebene Ausführungsbeispiel, in dem die gesamte äußere Fläche (72) rau ausgebildet ist, ergibt sich der nach obiger Formel ermittelte Kennwert zu 38.

Es ist auch denkbar, nur einzelne Segmente der äußeren Fläche (72) rau auszubilden. Die anderen Bereiche haben dann eine niedrige Oberflächenrauigkeit. Der oder die Durchtrittswege (95) werden dann durch die rauen Flächensegmente bestimmt. Auch können die einzelnen Durchtrittswege (95) z.B. noppenartige Abstützelemente aufweisen, die u.a. die Verformung der Ventilplatte (81) beeinflussen können.

Auch Kombinationen der einzelnen Ausführungsbeispiele sind denkbar.

### Bezugszeichenliste:

- 10: Zylinder-Kolben-Einheit
- 11: Zylinder
- 12: Zylinderinnenwandung
- 13: Zylinderkopfdeckel
- 14: Schale, Schutzschale

- 16: Einschubanschläge
- 17: Zylinderboden
- 18: Aufnahmeklammer
- 19: Zylinderinnenraum

- 21: Ringnut in (13)
- 22: äußere Federführung
- 23: Hubbegrenzung
- 24: Inennwandung von (25)
- 25: aufgeweiteter Abschnitt
- 26: Kolbenbereich
- 27: Zylinderlängsachse
- 28: Zylinderkopf

- 31: Ausgleichskolben
- 32: Spiel
- 33: elastisch verformbares Element, Druckfeder
- 34: Führungsring
- 35: Aufnehmezapfen
- 36: Dichtelement
- 37: Ringnut
- 38: Dichtelementabschnitt, außen
- 39: Umfangsfläche

- 41: äußere Dichtnase
- 42: Dichtelementabschnitt, innen
- 43: Innenwandung
- 44: innere Dichtnase

- 51: Kolbenstange
- 52: Kolbenstangenkopf
- 53: Ringnut
- 54: Umfangsfläche

- 61: Kolben
- 62: Umfangsfläche von (61)
- 63: Ringnut
- 64: Kolbendichtelement, O-Ring
- 65: Durchbrüche, Längsdurchbrüche, Teil der Kolbendrossel
- 66: Kolbenstangenanschlussseite
- 67: Kolbenstirnfläche
- 68: Ringkanal
- 69: Kolbenmittellinie

- 71: innere Fläche
- 72: äußere Fläche
- 73: Kanal, Nut, Teil der Kolbendrossel
- 74: Gleitzapfen
- 75: Spiralnut
- 76: Grundfläche, Kanalgrund
- 77: seitliche Begrenzung, Begrenzungsfläche
- 78: Noppen

- 81: Ventilscheibe
- 82: Endlage
- 83: Endlage
- 84: Abhebesicherung
- 85: kolbenseitige Oberfläche
- 91: Verdrängungsraum
- 92: Ausgleichsraum
- 93: Längsrichtung
- 94: Hydrauliköl, Öl
- 95: Durchtrittsweg

- Rₐ: Mittenrauwert
- R_{a,E}: Mittenrauwert einer Einzelfläche.

## Patentansprüche

1. Zylinder-Kolben-Einheit (10), die einen Zylinder (11) und einen in diesem mittels einer Kolbenstange (51) geführten, gegen die Zylinderinnenwandung (12) abgedichteten, einen Verdrängungsraum (91) gegen einen Ausgleichsraum (92) abgrenzenden Kolben (61) mit mindestens einem Längsdurchbruch (65) umfasst, wobei im Ausgleichsraum (92) oder im Verdrängunsgraum (91) ein mittels einer Druckfeder (33) abgestützter, zumindest gegen die Zylinderinnenwandung (12) abgedichteter Ausgleichskolben (31) angeordnet ist und wobei eine Ventilscheibe (81) zusammen mit der verdrängungsraumseitigen Kolbenfläche (67) einen Durchtrittsweg (95) begrenzt, **dadurch gekennzeichnet,**
**dass** die Querschnittsfläche des Durchtrittswegs (95), multipliziert mit dem Kehrwert der Länge des Durchtrittswegs (95) und dem Kehrwert des Mittenrauwerts Rₐ seiner Begrenzungsflächen kleiner ist als 50.

2. Zylinder-Kolben-Einheit (10) nach Anspruch 1, **dadurch gekennzeichnet, dass** der Ausgleichsraum (92) kolbenstangenseitig angeordnet ist.

3. Zylinder-Kolben-Einheit (10) nach Anspruch 1, **dadurch gekennzeichnet, dass** die Ventilscheibe (81) an die Kolbenstirnfläche (67) anlegbar ist.

4. Zylinder-Kolben-Einheit (10) nach Anspruch 1, **dadurch gekennzeichnet, dass** der Durchtrittsweg (95) eine Spiralnut (75) umfasst.

5. Zylinder-Kolben-Einheit (10) nach Anspruch 1, **dadurch gekennzeichnet, dass** der Durchtrittsweg (95) eine Grundfläche (76) aufweist, deren Mittenrauwert Ra größer ist als 6,3 Mikrometer.

6. Zylinder-Kolben-Einheit (10) nach Anspruch 1, **dadurch gekennzeichnet, dass** der Durchtrittsweg (95) zumindest bereichsweise in die Kolbenstirnfläche (67) eingeprägt ist.

## Claims

1. Cylinder-piston unit (10) comprising a cylinder (11) and a piston (61), said piston guided inside the cylinder by means of a piston rod (51), sealed against the cylinder inner wall (12) and delimiting a displacement space (91) from a compensating space (92), said piston (61) having at least one passage (65) extending longitudinally therethrough, with the compensating space (92) or the displacement space (91) having therein a compensating piston (31) supported by a compression spring (33) and sealed against at least the cylinder inner wall (12), with a valve disc (81) delimiting a passageway (95) together with the displacement-side piston face (67), **characterized in that** the cross-sectional surface area of passageway (95), multiplied by the reciprocal length of passageway (95) and the reciprocal average roughness value Rₐ of its defining surfaces, is smaller than 50.

2. Cylinder-piston unit (10) as claimed in claim 1, **characterized in that** the compensating space (92) is disposed on the rod side of the piston.

3. Cylinder-piston unit (10) as claimed in claim 1, **characterized in that** the valve disc (81) is adapted to engage the piston face (67).

4. Cylinder-piston unit (10) as claimed in claim 1, **characterized in that** the passageway (95) comprises a spiral groove (75).

5. Cylinder-piston unit (10) as claimed in claim 1, **characterized in that** the passageway (95) has a base surface (76) of which the average roughness value Rₐ is greater than 6.3 micrometers.

6. Cylinder-piston unit (10) as claimed in claim 1, **characterized in that** the passageway (95) is embossed into piston face (67) at least section-wise.

## Revendications

1. Unité cylindre-piston (10) qui comprend un cylindre (11) et un piston (61) guidé dans ce cylindre au moyen d'une tige de piston (51), rendu étanche par rapport à la paroi intérieure du cylindre (12) et séparant une chambre de refoulement (91) par rapport à une chambre de compensation (92), avec au moins un ajour longitudinal (65), un piston de compensation (31), en appui sur un ressort de compression (33) et rendu étanche au moins par rapport à la paroi intérieure du cylindre (12), étant disposé dans la chambre de compensation (92) ou dans la chambre de refoulement (91) et un disque de soupape (81) délimitant une voie de passage (95) conjointement avec la surface de piston (67) du côté chambre de refoulement,
**caractérisée en ce**
**que** la surface de section de la voie de passage (95), multipliée par la valeur inverse de la longueur de la voie de passage (95) et la valeur inverse de l'indice de rugosité arithmétique moyenne Rₐ de ses surfaces de délimitation, est inférieure à 50.

2. Unité cylindre-piston (10) selon la revendication 1, **caractérisée en ce que** la chambre de compensation (92) se situe côté tige de piston.

3. Unité cylindre-piston (10) selon la revendication 1, **caractérisée en ce que** le disque de soupape (81) peut s'appliquer à la face frontale du piston (67).

4. Unité cylindre-piston (10) selon la revendication 1, **caractérisée en ce que** la voie de passage (95) comporte une rainure en spirale (75).

5. Unité cylindre-piston (10) selon la revendication 1, **caractérisée en ce que** la voie de passage (95) présente une surface de base (76) dont la rugosité moyenne Ra est supérieure à 6,3 micromètres.

6. Unité cylindre-piston (10) selon la revendication 1, **caractérisée en ce que** la voie de passage (95) est gravée, au moins par endroits, dans la surface frontale du piston (67).
